# EUROPÄISCHE PATENTANMELDUNG

(11) **EP 4 610 221 A1**
(43) Veröffentlichungstag der Anmeldung: **03.09.2025**
(21) Anmeldenummer: 24160300.0
(22) Anmeldetag: 28.02.2024
(51) Int. Cl.: C01B 3/38, C01B 3/48, C01B 3/50, C01B 3/52

(54) **VERFAHREN UND ANLAGE ZUR BEREITSTELLUNG EINES WASSERSTOFFSTROMS**

(71) Anmelder: GasConTec GmbH, 61348 Bad Homburg v. d. Höhe (DE)
(72) Erfinder: Rappold, Dorit, 60437 Frankfurt (DE); Lauer, Wolfgang, 34613 Schwalmstadt (DE); Wagner, Ulrich, 06406 Bernburg, OT Biendorf (DE); Balthasar, Wolff, 40883 Ratingen (DE)
(74) Vertreter: Patentanwälte Bauer Vorberg Kayser

(57) **Zusammenfassung**

Die Erfindung betrifft ein Verfahren zur Bereitstellung eines Wasserstoffstroms (7) in einer Anlage (2) zur Bereitstellung des Wasserstoffstroms (7), wobei ein kohlenstoffhaltiger Energieträgerstrom (3) einer Synthesegasreaktoranordnung (4) zum Gewinnen eines Synthesegasstroms (5) mit Wasserstoff und Kohlenstoffoxiden zugeführt wird, wobei die Synthesegasreaktoranordnung (4) aus dem Energieträgerstrom (3) den Synthesegasstrom (5) durch eine autotherme Reformierung gewinnt, wobei der Synthesegasstrom (5) einer Shiftvorrichtung (15a-c) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, wobei der Synthesegasstrom (5) prozesstechnisch der Shiftvorrichtung (15a-c) nachgelagert einer Kohlenstoffdioxidwäsche (30) zum Auswaschen mindestens eines Teiles des Kohlenstoffdioxids aus dem Synthesegasstrom (5) zugeführt wird, wobei aus einer Regenerationsstufe der Kohlenstoffdioxidwäsche (30) ein Flashgasstrom freigesetzt wird, welcher Flashgasstrom einer Heizvorrichtung der Anlage (2) zur Unterfeuerung zugeführt wird, wobei der Synthesegasstrom (5) der Kohlenstoffdioxidwäsche (30) prozesstechnisch nachgelagert zumindest teilweise einer Trennanordnung (6) zum Trennen des Synthesegasstroms (5) zumindest in einen Wasserstoffstrom (7) mit Wasserstoff und in einen Kohlenstoffoxide aufweisenden Abgasstrom (8) zugeführt wird. Das Verfahren ist dadurch gekennzeichnet, dass der Energieträgerstrom (3) vor Zu-führung zur Synthesegasreaktoranordnung (4) einer Sättigungsstufe (11) zugeführt wird, in welcher Sättigungsstufe (11) dem Energieträgerstrom (3) vorgewärmtes Kondensat (12), welches in der Anlage (2) angefallen ist, zugeführt wird und dass ein Dampfanteil des Synthesegasstroms (5) bei Zuführung zu der Shiftvorrichtung (15a-c) zu mindestens 80 % bereits bei Austritt des Synthesegasstroms (5) aus der Synthesegasreaktoranordnung (4) vorhanden ist. Ebenso betrifft die Erfindung eine entsprechende Anlage (2) zur Bereitstellung eines Wasserstoffstroms (7),

## Beschreibung

Die Erfindung betrifft ein Verfahren zur Bereitstellung eines Wasserstoffstroms mit den Merkmalen des Oberbegriffs von Anspruch 1 sowie eine Anlage zur Bereitstellung eines Wasserstoffstroms mit den Merkmalen des Oberbegriffs von Anspruch 16.

Wasserstoff ist ein Stoff, der zunehmend Bedeutung als Energieträger gewinnt. Attraktiv an Wasserstoff als Energieträger ist insbesondere, dass bei seiner Verbrennung kein Kohlenstoffdioxid entsteht. Um eine möglichst günstige CO2-Bilanz zu erreichen, sollte aber auch beim Gewinnen des Wasserstoffs möglichst wenig oder gar kein Kohlenstoffdioxid freigesetzt werden.

In diesem Zusammenhang besteht erhöhtes Interesse daran, Wasserstoff auf eine Weise zu gewinnen, die einen sehr kleinen CO2-Fußabdruck aufweist. Man spricht im Falle eines sogenannten "low-low carbon footprint" dann auch von "blauem" Wasserstoff.

Eine attraktive Möglichkeit des Erzeugens von Wasserstoff sieht vor, dass der Wasserstoff aus Synthesegas gewonnen wird, welches Synthesegas seinerseits aus einem kohlenstoffhaltigen Energieträgerstrom wie z. B. Erdgas gewonnen wird. Aus dem Synthesegas kann dann etwa durch eine PSA ein hochreiner Wasserstoffstrom gewonnen werden. Der Einsatz einer PSA verhindert Verunreinigungen in dem Gas, das für eine nachfolgende Synthese, wie z.B. eine Ammoniaksynthese, verwendet wird, sodass entsprechende Reinigungsvorkehrungen entbehrlich werden.

Andererseits erfordert auch das Gewinnen des Synthesegases Energie, wobei speziell beim Einsatz eines Steamreformers zu diesem Zweck bis zu 30 % des eingesetzten Erdgases zu seiner Unterfeuerung benötigt werden. Das dabei im Rauchgas enthaltene CO2 wird in die Atmosphäre abgegeben. Ansonsten im Prozess anfallendes CO2 kann mit einer Wäsche abgetrennt und genutzt oder sequestriert werden, ohne dass es zu einer Abgabe in die Atmosphäre kommt.

Eine Verringerung der im Rauchgas emittierten Menge an CO2 entsprechend etwa 10 % des eingesetzten Erdgases lässt sich dadurch erreichen, dass anstelle eines Steamreforming ausschließlich eine autotherme Reformierung (ATR) zur Erzeugung des Synthesegases eingesetzt wird. Eine solche autotherme Reformierung ist beispielsweise in der US 2020/0055738 A1 der Casale S.A. aus dem Stand der Technik offenbart, von welcher die vorliegende Erfindung als nächstkommend ausgeht. Bei der autothermen Reformierung, bei welcher die erforderliche Temperatur durch eine katalytische partielle Oxidation erzeugt wird, ist keine externe Zufuhr von Hitze für die Erzeugung des Synthesegases erforderlich, sondern allenfalls eine Vorheizung des Energieträgerstroms durch gasgefeuerte Einsatzstofferhitzer ("fired heater") vor Zuführung zur autothermen Reformierung.

Bereits sehr niedrige Emissionswerte werden erreicht, indem man das Off-Gas der PSA, das bei der Auftrennung des Synthesegases in Wasserstoff und Off-Gas anfällt, zur notwendigen Vorheizung des Synthesegases vor dem ATR nutzt. Die verbleibende Energiedifferenz wird mit entschwefeltem Erdgas ausgeglichen.

Ebenso kann, wie in der bereits genannten US 2020/0055738 A1 beschrieben wird, an den gasgefeuerten Einsatzstofferhitzern zur Verringerung der CO2-Emissionen auch dekarbonisiertes Synthesegas verwendet werden. Das setzt allerdings voraus, dass eine sehr effektive CO2-Wäsche eingesetzt wird, da ansonsten das noch nicht abgeschiedene CO2 im Synthesegas die Restemission wieder erhöht. Zudem bedarf es darüber hinaus noch einer weiteren Aufarbeitung des dekarbonisierten Synthesegases vor nachfolgenden Synthesen, da insbesondere Methan aus dem Methanslip des ATR, welches bei der technischen Lösung gemäß der US 2020/0055738 A1 in dem Synthesekreislauf gerät, den Hauptteil der CO2-Emission nach Verbrennung in den gasgefeuerten Einsatzstofferhitzern ausmacht.

Auch die Befeuerung der gasgefeuerten Einsatzstofferhitzer mit bereits hergestelltem, hochreinen Wasserstoff verhindert nicht das Auftreten des Methans im Off-Gas. Und es ist ineffektiv, eine PSA auf höchste Reinheit auszulegen, um dann hergestellten, hochreinen Wasserstoff wieder zu verbrennen.

Ausgehend vom Stand der Technik besteht daher die Aufgabe der Erfindung darin, einen verbesserten Ansatz für das Gewinnen eines Wasserstoffstroms bereitzustellen, welcher einen sehr niedrigen CO2-Fußabdruck aufweist.

Bezogen auf ein Verfahren zur Bereitstellung eines Wasserstoffstroms gemäß dem Oberbegriff von Anspruch 1 wird diese Aufgabe durch die Merkmale des kennzeichnenden Teils von Anspruch 1 gelöst. Bezogen auf eine Anlage zur Bereitstellung eines Wasserstoffstroms gemäß dem Oberbegriff von Anspruch 16 wird diese Aufgabe durch die Merkmale des kennzeichnenden Teils von Anspruch 16 gelöst.

Der Erfindung liegt die Erkenntnis zugrunde, dass insgesamt die Menge an emittiertem CO2 in einer Anlage zur Bereitstellung eines Wasserstoffstroms mit einer autothermen Reformierung überraschenderweise dadurch verringert werden kann, dass das molare Dampf-zu-Kohlenstoff-Verhältnis (S/C-Verhältnis) in dem ATR dadurch erhöht wird, dass im Prozess anfallendes und mit Prozessabwärme vorgeheiztes Prozesskondensat mittels einer Sättigungsstufe dem ebenfalls vorgeheizten Erdgas zugeführt wird. Die Verwendung von Prozesskondensat in einer Sättigungsstufe anstelle der Zuführung von Hochdruckdampf führt zur Ersparnis der Energie, die für die Erzeugung des Hochdruckdampfs notwendig wäre. Durch die Erhöhung des molaren S/C-Verhältnisses wird zudem erreicht, dass die im Gesamtprozess erzeugte Dampfmenge ausreicht, um die Anlage ohne Import von Strom zu betreiben und die zusätzliche Produktion von Hochdruckdampf zu vermeiden. Ferner wird einerseits der Methanslip entscheidend verringert, sodass der dann als CO2 auftretende Kohlenstoff des auf diese Weise verhinderten Methans im Synthesegasstrom durch die CO2-Wäsche aus dem Prozesskreislauf entfernt werden kann und folglich nicht in die Atmosphäre freigesetzt wird. Andererseits verschiebt sich durch das höhere S/C-Verhältnis auch das Reaktionsgleichgewicht bei einer nachfolgenden Wassergas-Shift-Reaktion des Synthesegases in Richtung des Kohlenstoffdioxids, sodass der Anteil an Kohlenstoffmonoxid im Synthesegas verringert wird. Im Ergebnis verringert das auch die CO2-Emissionen, denn das durch die Shiftreaktion gewonnene Kohlenstoffdioxid kann ausgewaschen und der ebenfalls gewonnene Wasserstoff für die CO2-freie Unterfeuerung der gasgefeuerten Einsatzstofferhitzer verwendet werden. Besonders vorteilhaft ist es, wenn so viel Kondensat über den Sättiger vor dem ATR zugesetzt werden kann, dass sich das optimale Dampf-zu-C-Verhältnis für die Shiftreaktion einstellt.

Die bevorzugten Ausführungsbeispiele der Unteransprüche 3 und 4 betreffen die Möglichkeit, die Wassergas-Shift-Reaktion in mehreren Stufen mit jeweils unterschiedlichen Temperaturbereichen durchzuführen, wodurch eine besonders gründliche Umwandlung von Kohlenstoffmonoxid in Kohlenstoffdioxid erreicht werden kann, welcher dann aus dem Synthesegas ausgewaschen werden kann.

Die bevorzugten Ausführungsbeispiele der Unteransprüche 5 bis 7 betreffen vorteilhafte Maßnahmen zum Gewinnen von Prozesskondensat in der Anlage.

Schließlich zeigen die bevorzugten Ausführungsbeispiele der Unteransprüche 13 und 14 wie die Adsorptionsvorrichtung so betrieben werden kann, dass ausreichend Wasserstoff zum Betrieb der gasgefeuerten Einsatzstofferhitzer gewonnen werden kann und daher die Verwendung von Erdgas entbehrlich wird.

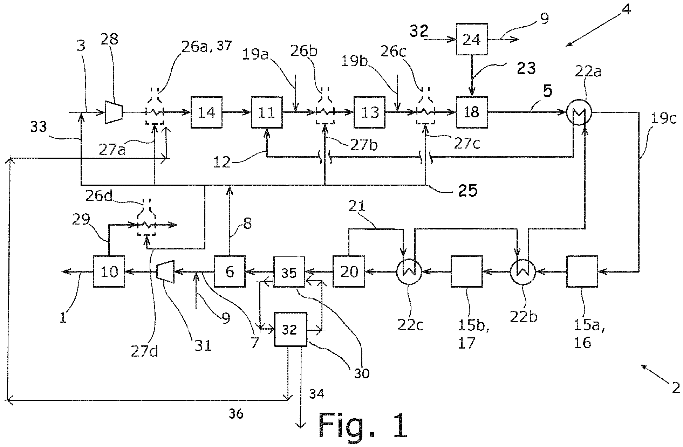

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem Ausführungsbeispiel.

Das vorschlagsgemäße Verfahren dient der Bereitstellung eines Wasserstoffstroms 7 in einer Anlage 2 zur Bereitstellung des Wasserstoffstroms 7. Bei dem vorschlagsgemäßen Verfahren wird ein kohlenstoffhaltiger Energieträgerstrom 3 einer Synthesegasreaktoranordnung 4 zum Gewinnen eines Synthesegasstroms 5 mit Wasserstoff und Kohlenstoffoxiden zugeführt, wobei die Synthesegasreaktoranordnung 4 aus dem Energieträgerstrom 3 den Synthesegasstrom 5 durch eine autotherme Reformierung gewinnt. Hier stellt eine insbesondere katalytische partielle Oxidation die für die endothermen Reformierungsreaktionen erforderliche Wärme bereit. Insbesondere kann die Synthesegasreaktoranordnung 4 eine Synthesegasreaktorstufe 18 zum Gewinnen des Synthesegasstroms 5 aufweisen. Die Synthesegasreaktoranordnung 4 kann auch eine Vielzahl von Synthesegasreaktorstufen 18 aufweisen. Vorzugsweise umfasst die Anlage 2 die Synthesegasreaktoranordnung 4. Vorzugsweise umfasst der Energieträgerstrom 3 Erdgas oder besteht sogar im Wesentlichen aus Erdgas.

Bei dem vorschlagsgemäßen Verfahren wird der Synthesegasstrom 5 einer Shiftvorrichtung 15a-c zugeführt, wobei in der Shiftvorrichtung 15a-c eine Wassergas-Shift-Reaktion zum Umsetzung zumindest eines Teils des Kohlenstoffmonoxids des Synthesegasstroms 5 mit Dampf des Synthesegasstroms 5 in Kohlenstoffdioxid und Wasserstoff stattfindet. Erkennbar umfasst der Synthesegasstrom 5 also Wasser.

Bei dem vorschlagsgemäßen Verfahren wird weiter der Synthesegasstrom 5 der Shiftvorrichtung 15a-c prozesstechnisch nachgelagert einer Kohlenstoffdioxidwäsche 30 zum Auswaschen mindestens eines Teiles des Kohlenstoffdioxids aus dem Synthesegasstrom 5 zugeführt. Die Kohlenstoffdioxidwäsche 30 ist von der vorschlagsgemäßen Anlage 2 umfasst.

Bei dem vorschlagsgemäßen Verfahren wird aus einer Regenerationsstufe 32 der Kohlenstoffdioxidwäsche 30 ein Flashgasstrom 36 freigesetzt, welcher Flashgasstrom 36 zumindest teilweise, vorzugsweise vollständig, einer Heizanordnung 37 der Anlage 2 zur Unterfeuerung zugeführt wird. Bei dieser Heizanordnung 37 kann es sich um eine oder mehrere, im Grunde beliebig ausgestaltete Vorrichtungen handeln, in denen jeweils ein Speisestrom zur Erhitzung verbrannt wird. Neben der Regenerationsstufe 32 weist die Kohlenstoffdioxidwäsche auch eine Absorptionsstufe 35 auf.

Vorschlagsgemäß wird der Synthesegasstrom 5 der Kohlenstoffdioxidwäsche 30 prozesstechnisch nachgelagert zumindest teilweise einer Trennanordnung 6 zum Trennen des Synthesegasstroms 5 zumindest in den Wasserstoffstrom 7 mit Wasserstoff und in einen Kohlenstoffoxide aufweisenden Abgasstrom 8 zugeführt wird. Anders ausgedrückt wird der Synthesegasstrom 5 der Trennanordnung 6 zugeführt, nachdem er erst der Shiftvorrichtung 15a-c und dann der Kohlenstoffdioxidwäsche 30 zugeführt wurde. Dabei ist es nicht erforderlich, dass der Synthesegasstrom 5 prozesstechnisch unmittelbar nach der Kohlenstoffdioxidwäsche 30 der Trennanordnung 6 oder unmittelbar nach der Shiftvorrichtung 15a-c der Kohlenstoffdioxidwäsche 30 zugeführt wird.

Grundsätzlich kann der Wasserstoffstrom 7 für einen beliebigen Zweck verwendet werden, beispielsweise für die Methanolherstellung, für eine Hydrierungsreaktion oder als Brennstoff. Im vorliegenden Ausführungsbeispiel und bevorzugt wird der Wasserstoffstrom 7 zumindest teilweise sowie ein Stickstoffstrom 9 einer Ammoniak-Reaktoranordnung 10 zugeführt und dort in Ammoniak 1 umgewandelt wird. Es wird also dementsprechend Wasserstoffstrom 7 zumindest teilweise der Ammoniak-Reaktoranordnung 10 zugeführt. Es kann sein, dass mehr als ein Wasserstoffstrom 7 sowie ggf. weitere Ströme aus der Trennanordnung 6 durch Trennen des Synthesegasstroms 5 gewonnen werden. In diesem Fall können auch die weiteren Wasserstoffströme 7 ganz oder teilweise der Ammoniak-Reaktoranordnung 10 zugeführt werden. Vorzugsweise umfasst die Anlage 2 die Trennanordnung 6, die Shiftvorrichtung 15a-c und/oder die Ammoniak-Reaktoranordnung 10.

Vorzugsweise werden der Wasserstoffstrom 7 und der Stickstoffstrom 9 zusammengeführt und anschließend der Ammoniak-Reaktoranordnung 10 zugeführt. Insbesondere kann ein Ammoniak-Synthesegaskompressor 31 der Anlage 2 zur vorzugsweise gemeinsamen Druckerhöhung des Wasserstoffstroms 7 und des Stickstoffstroms 9 vorgesehen sein.

Die autotherme Reformierung hat u.a. den Vorteil, dass sie zu einem hohen Druck des gewonnenen Synthesegasstroms 5 führt. Daher ist es bevorzugt, dass der Synthesegasstrom 5 von der Synthesegasreaktoranordnung 4 zur Trennanordnung 6 druckerhöhungsfrei geführt wird. Anders ausgedrückt findet keine Druckerhöhung des Synthesegasstroms 5 zwischen der Synthesegasreaktoranordnung 4 und der Trennanordnung 6 statt, wodurch die erheblichen Kosten für eine Kompressorstufe eingespart werden können.

Die Trennanordnung 6 kann unterschiedliche Arten von Vorrichtungen umfassen. Gemäß einer ersten Möglichkeit umfasst die Trennanordnung 6 eine Adsorptionsvorrichtung zum Abtrennen von Wasserstoff, wobei es sich insbesondere - wie bei dem vorliegenden Ausführungsbeispiel - um eine Druckwechsel-Adsorptionsvorrichtung oder um eine Temperaturwechsel-Adsorptionsvorrichtung handeln kann. Alternativ oder zusätzlich kann die Trennanordnung auch eine Membranvorrichtung zum Abtrennen von Wasserstoff aufweisen.

Das vorschlagsgemäße Verfahren ist dadurch gekennzeichnet, dass der Energieträgerstrom 3 vor Zuführung zur Synthesegasreaktoranordnung 4 einer Sättigungsstufe 11 zugeführt wird, in welcher Sättigungsstufe 11 dem Energieträgerstrom 3 vorgewärmtes Kondensat 12, welches in der Anlage 2 angefallen ist, zugeführt wird.

Weiter ist das vorschlagsgemäße Verfahren dadurch gekennzeichnet, dass ein Dampfanteil des Synthesegasstroms 5 bei Zuführung zu der Shiftvorrichtung 15a-c zu mindestens 80 % bereits bei Austritt des Synthesegasstroms 5 aus der Synthesegasreaktoranordnung 4, insbesondere bei Austritt des Synthesegasstroms 5 aus der Synthesegasreaktorstufe 18, vorhanden ist. Falls die Synthesegasreaktoranordnung 4 eine Vielzahl von Synthesegasreaktorstufen 18 aufweisen sollte, so bezieht sich der Austritt des Synthesegasstroms 5 aus der Synthesegasreaktoranordnung 4 vorzugsweise auf den Austritt des Synthesegasstroms 5 aus der prozesstechnisch an letzter Stelle angeordnete Synthesegasreaktorstufe 18.

Die vorstehende Anteilsangabe und die nachfolgenden Anteilsangaben in diesem Zusammenhang beziehen sich auf die vorzugsweise in Mol ausgedrückte Stoffmenge an Dampf und damit Wasser. Der obige Sachverhalt lässt sich also so ausdrücken, dass mindestens 80 % des Stoffmengenstroms an Dampf in dem Synthesegasstrom 5 bei Zuführung zu der Shiftvorrichtung 15a-c zu bereits bei Austritt des Synthesegasstroms 5 aus der Synthesegasreaktoranordnung 4 in dem Synthesegasstrom 5 vorhanden ist. Anders ausgedrückt ist die Stoffmenge an Wasser, welche als Dampf bei Zuführung zur Shiftvorrichtung 15a-c vorhanden ist, zu mindestens 80 % so zugeführt worden, dass sie bereits bei Austritt aus der Synthesegasreaktoranordnung 4 als Teil des Synthesegasstroms 5 vorhanden war. Unter dem Dampfanteil des Synthesegasstroms 5 im vorliegenden Sinne ist die Gesamtmenge an Wasser, verstanden als Stoffmenge, zu verstehen, welche sich im Synthesegasstrom 5 bei Zuführung zu der Shiftvorrichtung 15a-c befindet. Insoweit gibt es nur einen Dampfanteil. Dieser kann auch als der Dampfanteil des Synthesegasstroms 5 bezeichnet werden. Aus den bei der Zuführung zur Shiftvorrichtung 15a-c herrschenden Umständen ergibt sich, dass dieses Wasser als Dampf vorliegt. Mindestens 80 % dieser Wassermenge im Synthesegasstrom 5 bei Zuführung zur Shiftvorrichtung 15a-c ist demnach vorschlagsgemäß bereits bei Austritt des Synthesegasstroms 5 aus der Synthesegasreaktoranordnung 4 vorhanden. Anders ausgedrückt soll die aus einer potenziell anderen Quelle zugeführte Stoffmenge an Wasser höchstens 20 % der Stoffmenge an Wasser bei Zuführung zu der Shiftvorrichtung 15a-c betragen.

Vorzugsweise ist der Dampfanteil des Synthesegasstroms 5 bei Zuführung zu der Shiftvorrichtung 15a-c zu mindestens 85 % und insbesondere zu mindestens 90 % bereits bei Austritt des Synthesegasstroms 5 aus der Synthesegasreaktoranordnung 4 vorhanden. Hier ist es weiter bevorzugt, dass der Dampfanteil des Synthesegasstroms 5 bei Zuführung zu der Shiftvorrichtung 15a-c zu mindestens 80 %, vorzugsweise zu mindestens 85 % und insbesondere zu mindestens 90 % auf das in der Sättigungsstufe 11 zugeführte Kondensat zurückgeht. Durch die Zuführung in der Sättigungsstufe 11 liegt das zugeführte Wasser zu dem entsprechenden Anteil als Dampf in der Synthesegasreaktoranordnung 4 vor.

Bei dem Kondensat 12 handelt es sich um flüssiges Wasser, das durch Kondensation von gasförmigen Wasser in der Anlage 1 gewonnen wurde. Bei der Sättigungsstufe 11 handelt es sich um einen Vorrichtung, mit welcher flüssiges Wasser einem Gasstrom - hier speziell dem Energieträgerstrom 3 - zugeführt werden kann, sodass sich der Anteil an Dampf im dem jeweiligen Gasstrom, hier also dem Energieträgerstrom 3, erhöht. Der Vorteil gegenüber einer Zuführung von Hochdruckdampf liegt darin, dass dieser Hochdruckdampf nicht zusätzlich erzeugt werden muss. Im vorliegenden Ausführungsbeispiel und in insoweit bevorzugter Weise wird das in den Wärmetauscherstufen 22a-c vorgewärmte Kondensat bei 260° Celsius auf einen Druck von 60 bar für die Zuführung zur Sättigungsstufe 11 gepumpt. Vorzugsweise umfasst die Anlage 2 die Sättigungsstufe 11.

Bevorzugt ist weiter, dass bei der autothermen Reformierung in der Synthesegasreaktoranordnung 4 und insbesondere in der Synthesegasreaktorstufe 18 ein molares Dampf-zu-Kohlenstoff-Verhältnis von mindestens 1,5, vorzugsweise von mindestens 1,6, weiter vorzugsweise ein molares Dampf-zu-Kohlenstoff-Verhältnis von mindestens 2 und insbesondere ein molares Dampf-zu-Kohlenstoff-Verhältnis von mindestens 2,4, besteht. Je höher das Dampf-zu-Kohlenstoff-Verhältnis ist, umso geringer ist der Methanslip und umso wirksamer kann Kohlenstoffmonoxid bei der Wassergas-Shift-Reaktion in Kohlenstoffdioxid umgewandelt werden.

Die nachstehende Tabelle gibt verschiedene Prozessparameter wieder, die sich bei unterschiedlichen molaren Dampf-zu-Kohlenstoff-Verhältnissen und einer bei 65 bar betriebenen autothermen Reformierung einstellen.

| | | | | | | |
|---|---|---|---|---|---|---|
| Dampf/C Verhältnis | 1,2 | 1,6 | 2,0 | 2,4 | 2,8 | 3,0 |
| CH₄ Slip % | 3,5% | 2,5% | 1,6% | 1,2% | 0,9% | 0,8% |

| Ausgang ATR trocken | | | | | | |
|---|---|---|---|---|---|---|
| CO₂ mol/mol | 0,083 | 0,095 | 0,107 | 0,118 | 0,129 | 0,134 |
| CO mol/mol | 0,230 | 0,218 | 0,206 | 0,195 | 0,183 | 0,179 |
| H₂ mol/mol | 0,651 | 0,661 | 0,668 | 0,673 | 0,677 | 0,680 |
| Spez. Energieverbrauch GJ/t NH₃ | 32,22 | 32,25 | 32,25 | 32,25 | 32,25 | 32,25 |
| Carbon Recovery Rate % | 80,4 | 85,7 | 89,2 | 91,4 | 93,0 | 93,5 |
| Verbleibende CO₂ Emission t CO₂ /t NH₃ | 0,351 | 0,255 | 0,192 | 0,153 | 0,127 | 0,117 |

Erkennbar ist, dass sich mit höherem Dampf-zu-Kohlenstoff-Verhältnis der Methanslip verringert. Ebenso erhöht sich der Anteil von Kohlenstoffdioxid und von Wasserstoff gegenüber dem von Kohlenstoffmonoxid im Synthesegas. Zwar findet eine leichte Erhöhung des Energieverbrauchs statt. Dies wird aber dadurch mehr als kompensiert, dass sich der Prozentsatz des rekuperierten Kohlenstoffdioxids stark erhöht. Im Ergebnis können auf diese Weise die CO2-Emissionen um bis zu 2/3 verringert werden.

Grundsätzlich kann der Energieträgerstrom direkt der autothermen Reformierung zugeführt werden, sodass also das Gewinnen des Synthesegasstroms 5 aus einer autothermen Reformierung besteht. Das bedeutet, dass also keine Dampfreformierung beim Gewinnen des Synthesegasstroms 5 stattfindet. Eine bevorzugte Ausführungsform des vorschlagsgemäßen Verfahrens ist dadurch gekennzeichnet, dass die Synthesegasreaktoranordnung 4 einen Pre-Reformer 13, welcher vorzugsweise von der Anlage 2 umfasst ist, zum Aufspalten von Kohlenwasserstoffen mit mindestens zwei Kohlenstoffatomen in Methan aufweist. Der Pre-Reformer 13 ist insbesondere der Synthesegasreaktorstufe 18 prozesstechnisch vorgeschaltet. Vorzugsweise erfolgt in dem Pre-Reformer 13 eine adiabatische Dampfreformierung über einem nickelbasierten Katalysator. Weiter ist bevorzugt, dass der Energieträgerstrom 3 vor Zuführung zur Sättigungsstufe 11 einer vorzugsweise von der Anlage 2 umfassten Entschwefelungsstufe 14 zur Entschwefelung des Energieträgerstroms 3 zugeführt wird. Ebenso ist es bevorzugt, dass das Gewinnen des Synthesegasstroms 5 aus der autothermen Reformierung und dem Pre-Reforming in dem Pre-Reformer 13 besteht. Dementsprechend findet dann keine herkömmliche Dampfreformierung bei dem Gewinnen des Synthesegasstroms 5 statt.

Eine weitere bevorzugte Ausführungsform des vorschlagsgemäßen Verfahrens ist dadurch gekennzeichnet, dass der Synthesegasstrom 5 vor Zuführung zur Trennanordnung 6 einer Vielzahl von Shiftvorrichtungen 15a, b zugeführt wird, welche vorzugsweise prozesstechnisch zueinander beabstandet angeordnet sind und insbesondere von der Anlage 2 umfasst sein können. Das bedeutet, dass prozesstechnisch zwischen zwei Shiftvorrichtungen 15a, b mindestens eine weitere Vorrichtung angeordnet ist, bei welcher es sich nicht um eine Shiftvorrichtung 15a, b handelt. Auf diese Weise ist es möglich, den Synthesegasstrom 5 von einer Shiftvorrichtung 15a, b zur nächsten auf eine jeweils andere angepasste Temperatur zu bringen. Bevorzugt ist weiter, dass der den Shiftvorrichtungen 15a, b zugeführte Synthesegasstrom 5 in den Shiftvorrichtungen 15a, b jeweils eine Wassergas-Shift-Reaktion zur Umsetzung zumindest eines Teils des Kohlenstoffmonoxids des Synthesegasstroms 5 mit Dampf des Synthesegasstroms 5 in Kohlenstoffdioxid und Wasserstoff stattfindet.

Gemäß einer bevorzugten Ausführungsform des vorschlagsgemäßen Verfahrens ist vorgesehen, dass in den Shiftvorrichtungen 15a, b die Wassergas-Shift-Reaktion jeweils in einem in Prozessrichtung abnehmenden Temperaturbereich stattfindet. Insbesondere kann es sein, dass die Shiftvorrichtungen 15a, b eine HT-Shiftvorrichtung 16 für eine Hochtemperatur-Wassergas-Shift-Reaktion und eine MT-Shiftvorrichtung 17 für eine Mitteltemperatur-Wassergas-Shift-Reaktion umfassen. Es kann alternativ oder zusätzlich auch sein, dass die Shiftvorrichtungen 15a, b eine NT-Shiftvorrichtung für eine Niedertemperatur-Wassergas-Shift-Reaktion umfassen. Dabei ist bevorzugt, dass prozesstechnisch die MT-Shiftvorrichtung 17 der HT-Shiftvorrichtung 16 folgt. Die NT-Shiftvorrichtung kann, falls vorgesehen, prozesstechnisch der MT-Shiftvorrichtung 17 folgen.

Die Hochtemperatur-Wassergas-Shift-Reaktion findet bei einer Temperatur zwischen 300° C und 450° C statt. Die Mitteltemperatur-Wassergas-Shift-Reaktion findet bei einer Temperatur zwischen 220° C und 270° C statt. Die Niedertemperatur-Wassergas-Shift-Reaktion findet bei einer Temperatur zwischen 180° C und 250° C statt. Die Hochtemperatur-Wassergas-Shift-Reaktion hat für die Umwandlung in CO2 zwar ein schlechteres Reaktionsgleichgewicht, aber eine bessere Reaktionsgeschwindigkeit. Das hohe molares Dampf-zu-Kohlenstoff-Verhältnis verbessert das Reaktionsgleichgewicht. Durch diese Kaskadierung der Shiftvorrichtungen kann zunächst ein rascher Abbau von Kohlenstoffmonoxid erreicht werden, wobei die nachfolgenden Stufen sukzessive die verbliebenen Reste an Kohlenstoffmonoxid umwandeln. Da die Konzentration des Kohlenstoffmonoxids bereits verringert wurde, kann auch eine längere Reaktionszeit in Kauf genommen werden.

Gemäß einer bevorzugten Ausführungsform des vorschlagsgemäßen Verfahrens ist vorgesehen, dass ein Dampfanteil des Synthesegasstroms 5 bei Zuführung zu einer prozesstechnisch ersten Shiftvorrichtung 15a der Shiftvorrichtungen 15a, b zu mindestens 80 %, vorzugsweise zu mindestens 90 %, insbesondere zu mindestens 95 %, auf das in der Sättigungsstufe 11 zugeführte Kondensat zurückgeht. Auf diese Weise kann auf die Zufuhr von Dampf zum Erreichen des gewünschten Dampfanteils im Wesentlichen verzichtet werden. Bezüglich des Dampfanteils des Synthesegasstroms 5 bei Zuführung zu der prozesstechnisch ersten Shiftvorrichtung 15a gelten die sinngemäß gleichen Feststellungen welche oben bereits zum Dampfanteil getroffen wurden. Insbesondere bezieht sich der Dampfanteil auf die in Mol ausgedrückte Stoffmenge an Wasser. Folglich soll also gemäß dieser bevorzugten Ausführungsform die Stoffmenge an Dampf im Synthesegasstrom 5 bei Zuführung zu einer prozesstechnisch ersten Shiftvorrichtung 15a der Shiftvorrichtungen 15a, b zu mindestens 80 %, vorzugsweise zu mindestens 90 %, insbesondere zu mindestens 95 %, auf das in der Sättigungsstufe 11 zugeführte Kondensat zurückgeht. Auch für das zugeführte Kondensat wird die Stoffmenge betrachtet. Zur genaueren Regelung des Dampf-zu-Kohlenstoff-Verhältnisses können Hochdruckdampfzufuhrvorrichtungen 19a-c entlang der Prozesstrecke vorgesehen sein. Diese können kleinere Mengen an Dampf zuführen.

Eine bevorzugte Ausführungsform des vorschlagsgemäßen Verfahrens ist dadurch gekennzeichnet, dass der Synthesegasstrom 5 vor Zuführung zur Trennanordnung 6, vorzugsweise den Shiftvorrichtungen 15a, b prozesstechnisch nachgelagert, einer Kondensationsstufe 20 zum Gewinnen von Prozesskondensat 21 zugeführt wird. Vorzugsweise ist die Kondensationsstufe 20 von der Anlage 2 umfasst. Vorzugsweise wird der Synthesegasstrom 5 den Shiftvorrichtungen 15a, b prozesstechnisch nachgelagert der Kondensationsstufe 20 zugeführt. Anders ausgedrückt ist die Kondensationsstufe 20 prozesstechnisch den Shiftvorrichtungen 15a, b nachgelagert angeordnet. Bevorzugt ist weiter, dass das in der Sättigungsstufe 11 zugeführte Kondensat 12 das in der Kondensationsstufe 20 gewonnene Prozesskondensat 21 umfasst oder dass sogar das in der Sättigungsstufe 11 zugeführte Kondensat 12 im Wesentlichen aus dem in der Kondensationsstufe 20 gewonnenen Prozesskondensat 21 besteht. Besonders vorteilhaft ist es, wenn in der Kondensationsstufe 20 soviel Prozesskondensat 21 gewonnen wird, dass der Dampfanteil des Synthesegasstroms 5 bei Zuführung zu der Shiftvorrichtung 15a-c zu mindestens 80 %, vorzugsweise zu mindestens 85 % und insbesondere zu mindestens 90 % auf das Prozesskondensat 21 zurückgeht. Auch diese prozentualen Angaben beziehen sich - sinngemäß gleich zu den obigen Feststellungen - auf die Stoffmenge an Dampf bzw. Wasser. Im Falle des Vorhandenseins einer Vielzahl von Shiftvorrichtungen 15a-c bezieht sich dies vorzugsweise auf die prozesstechnisch erste Shiftvorrichtung 15a der Shiftvorrichtungen 15a-c. Durch einen so hohen Anteil wird erreicht, dass das Prozesskondensat 21 im Wesentlichen vollständig in einem Kreislauf gefahren wird.

Eine weitere bevorzugte Ausführungsform des vorschlagsgemäßen Verfahrens ist dadurch gekennzeichnet, dass der Synthesegasstrom 5 vor Zuführung zur Adsorptionsvorrichtung 6, vorzugsweise der Kondensationsstufe 20 vorgelagert, einer Vielzahl von Wärmetauscherstufen 22a-c zum Abkühlen des Synthesegasstroms zugeführt wird. Bevorzugt sind die Wärmetauscherstufen 22a-c von der Anlage 2 umfasst. Auf diese Weise kann der Synthesegasstrom 5 zum Erhöhen der Ausbeute an Prozesskondensat 21 abgekühlt werden. Vorzugsweise sind die Wärmetauscherstufen 22a-c zueinander prozesstechnisch beabstandet angeordnet. Insbesondere können die Wärmetauscherstufen 22a-c zumindest teilweise prozesstechnisch zwischen den Shiftvorrichtungen 15a-c angeordnet sein. Als besonders vorteilhaft hat sich die Variante erweisen, bei der eine prozesstechnisch erste Wärmetauscherstufe 22a prozesstechnisch der Synthesegasreaktoranordnung 4 nachgelagert und den Shiftvorrichtungen 15a, b vorgelagert angeordnet ist. Mit der prozesstechnisch ersten Wärmetauscherstufe 22a ist diejenige Wärmetauscherstufe gemeint, auf die der Synthesegasstrom 5 aus der Synthesegasreaktoranordnung 4 kommend prozesstechnisch als erstes trifft.

Auf diese Weise kann die Temperatur des Synthesegasstroms 5 noch vor Erreichen der ersten Shiftvorrichtung 15a verringert und insbesondere exakt auf den optimalen Temperaturwert eingestellt werden. Grundsätzlich soll ja nach Abschluss der Wassergas-Shift-Reaktionen die Temperatur des Synthesegasstroms 5 für eine möglichst weit reichende Kondensation herabgesunken sein.

Gemäß einer bevorzugten Ausführungsform des vorschlagsgemäßen Verfahrens ist vorgesehen, dass zumindest einem Teil der Wärmetauscherstufen 22a-c und vorzugsweise allen Wärmetauscherstufen 22a-c das Prozesskondensat 21 als Kühlmittel zugeführt wird. Insbesondere kann dadurch das Prozesskondensat 21 durch zumindest einen Teil und vorzugsweise durch alle Wärmetauscherstufen 22a-c vorgewärmt werden. Auf diese Weise kann im Ergebnis auch das in der Sättigungsstufe 11 zugeführte Kondensat 12 vorgewärmt werden. Bevorzugt ist weiter dass das Prozesskondensat 21 nacheinander den Wärmetauscherstufen 22a-c und anschließend der Sättigungsstufe 11 zugeführt wird. Dabei sind die Wärmetauscherstufen 22a-c vorzugsweise so eingerichtet, dass in der prozesstechnisch ersten Wärmetauscherstufe 22a keine Kondensation von Wasser aus dem Synthesegasstrom 5 erfolgt, die erste Wärmetauscherstufe 22a also kondensationsfrei bleibt.

Grundsätzlich kann die Trennanordnung 6 mit einem beliebigen Wirkungsgrad der Trennung betrieben werden. Eine bevorzugte Ausführungsform des vorschlagsgemäßen Verfahrens ist dadurch gekennzeichnet, dass die Trennanordnung 6 einen Wirkungsgrad der Trennung von höchstens 90 % hat, sodass höchstens ein molarer Anteil von 90 % des Wasserstoffs aus dem Synthesegasstrom 5 von dem Wasserstoffstrom 7 umfasst ist. Hiermit ist der molare Anteil des Wasserstoffs aus dem Synthesegasstrom 5 insgesamt gemeint. Folglich kann dieser Anteil auch als der molare Anteil von 90 % des Wasserstoffs aus dem Synthesegasstrom 5 bezeichnet werden. Dementsprechend können bis zu 10 % des molaren Anteils von Wasserstoff in dem Synthesegasstrom 5 von dem Abgasstrom 8 umfasst sein. Auf diese Weise erhöht sich der Stoffanteil in dem Abgasstrom 8, der zur Verfeuerung ohne CO2-Emission eingesetzt werden kann. Dies wird untenstehend noch beschrieben. Vorzugsweise hat die Trennanordnung 6 einen Wirkungsgrad der Trennung von höchstens 85 % oder sogar höchstens von 80 %, sodass höchstens ein molarer Anteil von 85 % des Wasserstoffs bzw. höchstens ein molarer Anteil von 80 % des Wasserstoffs aus dem Synthesegasstrom 5 von dem Wasserstoffstrom 7 umfasst ist. Damit steht im Abgasstrom 8 noch mehr Wasserstoff für die Verfeuerung zur Verfügung. Der Wirkungsgrad kann so eingestellt werden, dass im Abgasstrom 8 soviel Wasserstoff zur Verfügung gestellt werden kann, dass kein zusätzliches Erdgas verfeuert werden muss.

Eine bevorzugte Ausführungsform des vorschlagsgemäßen Verfahrens ist dadurch gekennzeichnet, dass die Trennanordnung 6 mit einem im Wesentlichen maximalen Wirkungsgrad der Trennung betrieben wird und dass ein frisch gewonnener Wasserstoffverfeuerungsstrom zur Unterfeuerung eines oder mehrerer gasgefeuerte Einsatzstofferhitzer 26a-d verwendet wird. Bei einem hohen Wirkungsgrad der Trennanordnung 6 wird regelmäßig nicht genügend Wasserstoff im Abgasstrom 8 zum Erreichen der erforderlichen Brennleistung vorhanden sein. Ergänzend kann Wasserstoff aus dem Wasserstoffstrom 7 abgezweigt werden. Die Heizanordnung 37 kann, wie in der Fig. 1 dargestellt, einen oder auch mehrere Einsatzstofferhitzer 26a-d umfassen oder aus diesen bestehen. Der Flashgasstrom 36 kann unabhängig von dem Abgasstrom 8 der Heizanordnung 37 zugeführt werden. Es kann aber auch sein, dass der Flashgasstrom 36 ganz oder teilweise mit dem Abgasstrom 8 zusammengeführt und dann der Heizanordnung 37 zugeführt wird.

Grundsätzlich kann die Synthesegasreaktoranordnung 4 auch mit Umgebungsluft betrieben werden. Eine weitere bevorzugte Ausführungsform des vorschlagsgemäßen Verfahrens ist jedoch dadurch gekennzeichnet, dass ein Sauerstoffstrom 23 aus einer Sauerstoffgewinnungsanordnung 24 der Synthesegasreaktoranordnung 4 zum Gewinnen des Synthesegasstroms 5 zugeführt wird. Der Sauerstoffgewinnungsanordnung 24 wird Umgebungsluft 32 zugeführt. Auf diese Weise resultiert ein niedrigerer Stickstoffanteil in dem Synthesegasstrom 5. Speziell gewinnt die Synthesegasreaktoranordnung 4 aus dem Energieträgerstrom 3 den Synthesegasstrom 5 durch eine autotherme Reformierung mit dem Sauerstoffstrom 23.

Gemäß einer bevorzugten Ausführungsform des vorschlagsgemäßen Verfahrens ist vorgesehen, dass zumindest ein Teil der Kohlenstoffoxide aus dem Abgasstrom 8 durch einen Rückgewinnungsstrom 33 der Synthesegasreaktoranordnung 4 zugeführt wird. Damit wird erreicht, dass diese Kohlenstoffoxide jedenfalls zunächst nicht direkt oder im Falle des Kohlenstoffmonoxids nach Verbrennung in die Atmosphäre gelangen, sondern die vorherigen Prozessschritte wieder durchlaufen. Der Kohlenstoff in dem Rückgewinnungsstrom 33 kann dann, ggf. nach Umwandlung in Kohlenstoffdioxid, in der untenstehend näher beschriebenen Kohlenstoffdioxidwäsche ausgewaschen werden. Der Rückgewinnungsstrom 33 kann auf unterschiedliche Art und Weise aus dem Abgasstrom 8 gewonnen werden. Gemäß einer ersten Variante wird der Rückgewinnungsstrom 33 einfach aus dem Abgasstrom 8 abgezweigt, sodass der Rückgewinnungsstrom 33 im Wesentlichen die gleiche Zusammensetzung wie der Abgasstrom 8 aufweist.

Die Zuführung des Rückgewinnungsstroms 33 kann insbesondere dadurch erfolgen, dass der Rückgewinnungsstrom 33 dem Energieträgerstrom 3 zugeführt wird. Insbesondere kann es sein, dass der Rückgewinnungsstrom 33 dem Energieträgerstrom 3 einem Erdgaskompressor 28 zur Druckerhöhung des Energieträgerstroms 3 prozesstechnisch vorgelagert zugeführt wird. Jedoch ist es auch denkbar, dass der Rückgewinnungsstrom 33 dem Energieträgerstrom 3 dem Erdgaskompressor 28 prozesstechnisch nachgelagert zugeführt wird. Vorzugsweise umfasst die Anlage 2 den Erdgaskompressor 28.

Gemäß einer weiteren bevorzugten Ausführungsform des vorschlagsgemäßen Verfahrens ist vorgesehen, dass die Trennanordnung 6 aus dem Synthesegasstrom 5 auch einen, vorzugsweise wasserstoffhaltigen, Purgestrom 25 gewinnt, welcher insbesondere zur Unterfeuerung eines oder mehrerer gasgefeuerter Einsatzstofferhitzer 26a-d verwendet wird. Ein solcher gasgefeuerter Einsatzstofferhitzer 26a-d kann synonym auch als "fired heater" bezeichnet werden. Auch der Purgestrom 25 kann auf unterschiedliche Art und Weise gewonnen werden. Insbesondere kann der Purgestrom 25 aus dem Abgasstrom 8 gewonnen werden. Dieser Abgasstrom 8 wird ja durch die Trennanordnung 6 aus dem Synthesegasstrom 5 gewonnen. Im vorliegenden Ausführungsbeispiel und bevorzugt werden der Rückgewinnungsstrom 33 und der Purgestrom 25 durch Aufteilen des Abgasstroms 8 gewonnen. Vorzugsweise umfasst die Anlage 2 den oder die mehreren gasgefeuerten Einsatzstofferhitzer 26a-d.

Ebenso ist es möglich, dass der Abgasstrom 8 einer Druckwechsel-Adsorptionsvorrichtung oder einer Membranvorrichtung zugeführt wird. Aus der jeweiligen Vorrichtung kann dann als Strom mit einem höheren molaren Wasserstoffanteil der Purgestrom 25 und als Strom mit einem niedrigeren molaren Wasserstoffanteil der Rückgewinnungsstrom 33 gewonnen wird. Entsprechend weist der Purgestrom 25 bevorzugt einen niedrigeren molaren Anteil an Kohlenstoffmonoxid als der Rückgewinnungsstrom 33 auf.

Eine bevorzugte Ausführungsform des vorschlagsgemäßen Verfahrens ist dadurch gekennzeichnet, dass der Wirkungsgrad der Trennanordnung 6 so eingestellt ist, dass durch den Wasserstoffgehalt des Purgestroms 25 ein dem gasgefeuerten Einsatzstofferhitzer 26a-d zugeführte Speisestrom 27a-d im Wesentlichen erdgasfrei ist. Der Speisestrom 27a-d stellt den Gasstrom dar, welcher in dem jeweiligen gasgefeuerten Einsatzstofferhitzer 26a-d verfeuert wird. Insbesondere kann der Speisestrom 27a-d den Purgestrom 25 ganz oder teilweise umfassen. Der Speisestrom 27a-d kann auch aus dem Purgestrom 25 oder aus einem Teil des Purgestroms 25 bestehen. Mit einem ausreichend hohen Wasserstoffgehalt in dem Purgestrom 25 kann durch das Verbrennen des Wasserstoffs ausreichend Hitze erzeugt werden, sodass die Verbrennung von Erdgas zum Erreichen der gewünschten Temperatur entbehrlich ist.

Die Anlage 2 kann auch eine Vielzahl von gasgefeuerten Einsatzstofferhitzern 26a -d aufweisen. Im vorliegenden Ausführungsbeispiel dient ein erster gasgefeuerter Einsatzstofferhitzer 26a dem Erhitzen des Energieträgerstroms 3, wobei der erste gasgefeuerte Einsatzstofferhitzer 26a dem Erdgaskompressor 28 prozesstechnisch nachgelagert angeordnet ist. Der erste gasgefeuerte Einsatzstofferhitzer 26a bildet hier die Heizanordnung 37, welcher der Flashgasstrom 35 zugeführt wird. Der zweite gasgefeuerte Einsatzstofferhitzter 26b dient ebenfalls dem Erhitzen des Energieträgerstroms 3, ist aber prozesstechnisch zwischen der Sättigungsstufe 11 und dem Pre-Reformer 13 angeordnet. Auch der dritte gasgefeuerte Einsatzstofferhitzer 26c dient dem Erhitzen des Energieträgerstroms 3 und ist prozesstechnisch zwischen dem Pre-Reformer 13 und der Synthesegasreaktorstufe 18 angeordnet. Der vierte gasgefeuerte Einsatzstofferhitzer 26d schließlich dient dem Erhitzen eines Dampfstroms 29, welcher aus der Ammoniak-Reaktoranordnung 10 gewonnen wird.

Eine weitere bevorzugte Ausführungsform des vorschlagsgemäßen Verfahrens ist dementsprechend dadurch gekennzeichnet, dass der Purgestrom 25 zur Unterfeuerung einer Vielzahl von gasgefeuerten Einsatzstofferhitzern 26a-d der Anlage 2 und insbesondere zur Unterfeuerung aller gasgefeuerten Einsatzstofferhitzer 26a-d der Anlage 2 verwendet wird. Zu diesem Zweck kann es sein, dass der jeweilige Speisestrom 27 a-d aus einer Unterteilung des Purgestroms 25 in eine Vielzahl von Speiseströmen 27a-d gewonnen wird. Auf diese Weise wird die bevorzugte Variante ermöglicht, nach der durch den Wasserstoffgehalt des Purgestroms 25 der allen gasgefeuerten Einsatzstofferhitzer 26a-d der Anlage zugeführte jeweilige Speisestrom 27a-d im Wesentlichen erdgasfrei ist. Es liegt auf der Hand, dass das die CO2-Abgabe der Anlage 2 wesentlich verringert.

Neben dem Flashgasstrom 36 können auch weitere Ströme aus der Kohlenstoffdioxidwäsche 30 und speziell der Regenerationsstufe 32 gewonnen werden, vorzugsweise ein Kohlenstoffdioxidstrom 34. Auch bei diesem Kohlenstoffdioxidstrom 34 kann es sich um ein Flashgas handeln. Das als Kohlenstoffdioxidstrom 34 ausgewaschene Kohlenstoffdioxid kann dann sequestriert oder anderweitig verwendet werden und wird jedenfalls nicht zwangsläufig in die Atmosphäre emittiert. Insbesondere ist vorgesehen, dass in der Kohlenstoffdioxidwäsche 30 das Kohlenstoffdioxid durch ein Methanol umfassendes Waschmedium ausgewaschen wird.

Die vorschlagsgemäße Anlage 2 dient der Bereitstellung eines Wasserstoffstroms 7 und weist eine Synthesegasreaktoranordnung 4 zum Gewinnen eines Synthesegasstroms 5 mit Wasserstoff und Kohlenstoffoxiden aus einem kohlenstoffhaltigen Energieträgerstrom 3 durch eine autotherme Reformierung auf. Eine vorzugsweise katalytische partielle Oxidation stellt dabei die für die endothermen Reformierungsreaktionen erforderliche Wärme bereit.

Die vorschlagsgemäße Anlage 2 weist ferner eine Shiftvorrichtung 15a-c auf, welcher der Synthesegasstrom 5 zugeführt wird, wobei in der Shiftvorrichtung 15a-c eine Wassergas-Shift-Reaktion zur Umsetzung zumindest eines Teils des Kohlenstoffmonoxids des Synthesegasstroms 5 mit Dampf des Synthesegasstroms 5 in Kohlenstoffdioxid und Wasserstoff stattfindet.

Die vorschlagsgemäße Anlage 2 weist weiter eine prozesstechnisch der Shiftvorrichtung 15a-c nachgelagert angeordnete Kohlenstoffdioxidwäsche 30 zum Auswaschen mindestens eines Teiles des Kohlenstoffdioxids aus dem Synthesegasstrom 5 auf, wobei die Kohlenstoffdioxidwäsche 30 eine Regenerationsstufe 32 zum Freisetzen eines Flashgasstroms 36 aufweist, welcher Flashgasstrom 36 zumindest teilweise einer Heizvorrichtung 37 der Anlage 2 zur Unterfeuerung zgeführt wird.

Die vorschlagsgemäße Anlage 2 weist ebenso eine prozesstechnisch der Kohlenstoffdioxidwäsche 30 nachgelagert angeordnete Trennanordnung 6 zum Trennen zumindest eines Teils des Synthesegasstroms 5 in einen Wasserstoffstrom 7 mit Wasserstoff und in einen Kohlenstoffoxide aufweisenden Abgasstrom 8 auf.

Die vorschlagsgemäße Anlage ist dadurch gekennzeichnet, dass die Anlage 2 eine prozesstechnisch der Synthesegasreaktoranordnung 4 vorgelagerte Sättigungsstufe 11 zur Zufuhr von in der Anlage 2 angefallenem Kondensat 12 an den Energieträgerstrom 3 aufweist.

Die vorschlagsgemäße Anlage ist weiter dadurch gekennzeichnet, dass ein Dampfanteil des Synthesegasstroms 5 bei Zuführung zu der Shiftvorrichtung 15a-c zu mindestens 80 % bereits bei Austritt des Synthesegasstroms 5 aus der Synthesegasreaktoranordnung 4 vorhanden ist.

Vorstehend beschriebene bevorzugte Ausgestaltungen, Merkmale und Eigenschaften des vorschlagsgemäßen Verfahrens entsprechen bevorzugten Ausgestaltungen, Merkmalen und Eigenschaften der vorschlagsgemäßen Anlage und umgekehrt.

## Patentansprüche

1. Verfahren zur Bereitstellung eines Wasserstoffstroms (7) in einer Anlage (2) zur Bereitstellung des Wasserstoffstroms (7), wobei ein kohlenstoffhaltiger Energieträgerstrom (3) einer Synthesegasreaktoranordnung (4) zum Gewinnen eines Synthesegasstroms (5) mit Wasserstoff und Kohlenstoffoxiden zugeführt wird, wobei die Synthesegasreaktoranordnung (4) aus dem Energieträgerstrom (3) den Synthesegasstrom (5) durch eine autotherme Reformierung gewinnt, wobei der Synthesegasstrom (5) einer Shiftvorrichtung (15a-c) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, wobei der Synthesegasstrom (5) prozesstechnisch der Shiftvorrichtung (15a-c) nachgelagert einer Kohlenstoffdioxidwäsche (30) zum Auswaschen mindestens eines Teiles des Kohlenstoffdioxids aus dem Synthesegasstrom (5) zugeführt wird, wobei aus einer Regenerationsstufe (32) der Kohlenstoffdioxidwäsche (30) ein Flashgasstrom (36) freigesetzt wird, welcher Flashgasstrom (36) zumindest teilweise einer Heizanordnung (37) der Anlage (2) zur Unterfeuerung zugeführt wird, wobei der Synthesegasstrom (5) der Kohlenstoffdioxidwäsche (30) prozesstechnisch nachgelagert zumindest teilweise einer Trennanordnung (6) zum Trennen des Synthesegasstroms (5) zumindest in den Wasserstoffstrom (7) mit Wasserstoff und in einen Kohlenstoffoxide aufweisenden Abgasstrom (8) zugeführt wird,, **dadurch gekennzeichnet, dass** der Energieträgerstrom (3) vor Zuführung zur Synthesegasreaktoranordnung (4) einer Sättigungsstufe (11) zugeführt wird, in welcher Sättigungsstufe (11) dem Energieträgerstrom (3) vorgewärmtes Kondensat (12), welches in der Anlage (2) angefallen ist, zugeführt wird und dass ein Dampfanteil des Synthesegasstroms (5) bei Zuführung zu der Shiftvorrichtung (15a-c) zu mindestens 80 % bereits bei Austritt des Synthesegasstroms (5) aus der Synthesegasreaktoranordnung (4) vorhanden ist.

2. Verfahren nach Anspruch 1, **dadurch gekennzeichnet, dass** die Synthesegasreaktoranordnung (4) einen Pre-Reformer (13) zum Aufspalten von Kohlenwasserstoffen mit mindestens zwei Kohlenstoffatomen in Methan aufweist, vorzugsweise, dass der Energieträgerstrom (3) vor Zuführung zur Sättigungsstufe (11) einer Entschwefelungsstufe (13) zur Entschwefelung des Energieträgerstroms (3) zugeführt wird.

3. Verfahren nach Anspruch 1 oder Anspruch 2, **dadurch gekennzeichnet, dass** der Synthesegasstrom (5) vor Zuführung zur Trennanordnung (6) einer Vielzahl von, vorzugsweise prozesstechnisch beabstandet angeordneten, Shiftvorrichtungen (15a-c) zugeführt wird, und dass in den Shiftvorrichtungen (15a-c) jeweils eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet.

4. Verfahren nach Anspruch 3, **dadurch gekennzeichnet, dass** in den Shiftvorrichtungen (15a-c) die Wassergas-Shift-Reaktion jeweils in einem in Prozessrichtung abnehmenden Temperaturbereich stattfindet, vorzugsweise, dass die Shiftvorrichtungen (15a-c) eine HT-Shiftvorrichtung (16) für eine Hochtemperatur-Wassergas-Shift-Reaktion und eine MT-Shiftvorrichtung (17) für eine Mitteltemperatur-Wassergas-Shift-Reaktion umfassen.

5. Verfahren nach Anspruch 3 oder 4, **dadurch gekennzeichnet, dass** ein Dampfanteil des Synthesegasstroms (5) bei Zuführung zu einer prozesstechnisch ersten Shiftvorrichtung (15a) der Shiftvorrichtungen (15a-c) zu mindestens 80 %, vorzugsweise mindestens 85 %, insbesondere mindestens 90 %, auf das in der Sättigungsstufe (11) zugeführte Kondensat zurückgeht.

6. Verfahren nach einem der Ansprüche 1 bis 5, **dadurch gekennzeichnet, dass** der Synthesegasstrom (5) vor Zuführung zur Trennanordnung (6), vorzugsweise den Shiftvorrichtungen (15a-c) prozesstechnisch nachgelagert, einer Kondensationsstufe (20) zum Gewinnen von Prozesskondensat (21) zugeführt wird, vorzugsweise, dass das in der Sättigungsstufe (11) zugeführte Kondensat (12) das in der Kondensationsstufe (20) gewonnene Prozesskondensat (21) umfasst, insbesondere, dass das in der Sättigungsstufe (11) zugeführte Kondensat (12) im Wesentlichen aus dem in der Kondensationsstufe (20) gewonnenen Prozesskondensat (21) besteht.

7. Verfahren nach einem der Ansprüche 1 bis 6, **dadurch gekennzeichnet, dass** der Synthesegasstrom (5) vor Zuführung zur Adsorptionsvorrichtung (6), vorzugsweise der Kondensationsstufe (20) vorgelagert, einer Vielzahl von Wärmetauscherstufen (22a-c) zum Abkühlen des Synthesegasstroms (5) zugeführt wird, vorzugsweise, dass die Wärmetauscherstufen (22a-c) zumindest teilweise prozesstechnisch zwischen den Shiftvorrichtungen (15a-c) angeordnet sind, insbesondere, dass eine prozesstechnisch erste Wärmetauscherstufe (22a) prozesstechnisch der Synthesegasreaktoranordnung (4) nachgelagert und den Shiftvorrichtungen (15a-c) vorgelagert angeordnet ist.

8. Verfahren nach einem der Ansprüche 1 bis 7, **dadurch gekennzeichnet, dass** bei der autothermen Reformierung in der Synthesegasreaktoranordnung (4) ein molares Dampf-zu-Kohlenstoff-Verhältnis von mindestens 1,6, vorzugsweise ein molares Dampf-zu-Kohlenstoff-Verhältnis von mindestens 2, insbesondere ein molares Dampf-zu-Kohlenstoff-Verhältnis von mindestens 2,4, besteht.

9. Verfahren nach einem der Ansprüche 1 bis 8, **dadurch gekennzeichnet, dass** die Trennanordnung (6) einen Wirkungsgrad der Trennung von höchstens 90 % hat, vorzugsweise von höchstens 85 % hat, sodass höchstens ein molarer Anteil von 10 % des Wasserstoffs, insbesondere höchstens ein molarer Anteil von 15 % des Wasserstoffs, aus dem Synthesegasstrom (5) von dem Wasserstoffstrom (7) umfasst ist.

10. Verfahren nach einem der Ansprüche 1 bis 8, **dadurch gekennzeichnet,**
**dass** die Trennanordnung (6) mit einem im Wesentlichen maximalen Wirkungsgrad der Trennung betrieben wird und dass ein frisch gewonnener Wasserstoffverfeuerungsstrom zur Unterfeuerung eines oder mehrerer gasgefeuerter Einsatzstofferhitzer (26a-d) verwendet wird.

11. Verfahren einem der Ansprüche 1 bis 10, **dadurch gekennzeichnet, dass**
ein Sauerstoffstrom (23) aus einer Sauerstoffgewinnungsanordnung (24) der Synthesegasreaktoranordnung (4) zum Gewinnen des Synthesegasstroms (5) zugeführt wird, vorzugsweise, dass die Synthesegasreaktoranordnung (4) aus dem Energieträgerstrom (3) den Synthesegasstrom (5) durch eine autotherme Reformierung mit dem Sauerstoffstrom (23) gewinnt.

12. Verfahren nach einem der Ansprüche 1 bis 11, **dadurch gekennzeichnet, dass** zumindest ein Teil der Kohlenstoffoxide aus dem Abgasstrom (8) durch einen Rückgewinnungsstrom (33) der Synthesegasreaktoranordnung (4) zugeführt wird.

13. Verfahren nach einem der Ansprüche 1 bis 12, **dadurch gekennzeichnet, dass** die Trennanordnung (6) aus dem Synthesegasstrom (5) auch einen, vorzugsweise wasserstoffhaltigen, Purgestrom (25) gewinnt, welcher insbesondere zur Unterfeuerung eines gasgefeuerten Einsatzstofferhitzers (26a-d) verwendet wird.

14. Verfahren nach Anspruch 13, **dadurch gekennzeichnet, dass** der Wirkungsgrad der Trennanordnung (6) so eingestellt ist, dass durch den Wasserstoffgehalt des Purgestroms (25) ein dem gasgefeuerten Einsatzstofferhitzer (26a-d) zugeführte Speisestrom (27) im Wesentlichen erdgasfrei ist.

15. Verfahren nach einem der Ansprüche 1 bis 14, **dadurch gekennzeichnet,, dass** in der Kohlenstoffdioxidwäsche (30) das Kohlenstoffdioxid durch ein Methanol umfassendes Waschmedium ausgewaschen wird.

16. Anlage zur Bereitstellung eines Wasserstoffstroms (7) mit einer Synthesegasreaktoranordnung (4) zum Gewinnen eines Synthesegasstroms (5) mit Wasserstoff und Kohlenstoffoxiden aus einem kohlenstoffhaltigen Energieträgerstrom (3) durch eine autotherme Reformierung, mit einer Shiftvorrichtung (15a-c), der der Synthesegasstrom (5) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, mit einer prozesstechnisch der Shiftvorrichtung (15a-c) nachgelagert angeordneten Kohlenstoffdioxidwäsche (30) zum Auswaschen mindestens eines Teiles des Kohlenstoffdioxids aus dem Synthesegasstrom (5), wobei die Kohlenstoffdioxidwäsche (30) eine Regenerationsstufe (32) zum Freisetzen eines Flashgasstroms (36) aufweist, welcher Flashgasstrom (36) zumindest teilweise einer Heizvorrichtung (37) der Anlage (2) zur Unterfeuerung zugeführt wird, und mit einer prozesstechnisch der Kohlenstoffdioxidwäsche (30) nachgelagert angeordneten Trennanordnung (6) zum Trennen zumindest eines Teils des Synthesegasstroms (5) in einen Wasserstoffstrom (7) mit Wasserstoff und in einen Kohlenstoffoxide aufweisenden Abgasstrom (8), **dadurch gekennzeichnet, dass** die Anlage (2) eine prozesstechnisch der Synthesegasreaktoranordnung (4) vorgelagerte Sättigungsstufe (11) zur Zufuhr von in der Anlage (2) angefallenem vorgewärmten Kondensat (12) an den Energieträgerstrom (3) aufweist und dass ein Dampfanteil des Synthesegasstroms (5) bei Zuführung zu der Shiftvorrichtung (15a-c) zu mindestens 80 % bereits bei Austritt des Synthesegasstroms (5) aus der Synthesegasreaktoranordnung (4) vorhanden ist.
